# EUROPEAN PATENT APPLICATION

(11) **EP 2 298 432 A1**
(43) Date of publication of application: **23.03.2011**
(21) Application number: 10173551.2
(22) Date of filing: 20.08.2010
(51) Int. Cl.: B01D 53/94, B01J 29/072, B01J 35/04, B01J 35/10

(54) **Exhaust gas purifier**

(30) Priority: 21.08.2009 JP 2009191769
(71) Applicant: Mitsubishi Jidosha Kogyo Kabushiki Kaisha, Tokyo 108-8410 (JP)
(72) Inventor: Iwachido, Kinichi, Tokyo (JP)
(74) Representative: Vossius & Partner

(57) **Abstract**

An exhaust gas purifier for purifying exhaust gas or an engine includes a carrier and a catalyst layer. The carrier contains zeolite which is ion-exchanged with iron. The carrier adsorbs a component of the exhaust gas. The catalyst layer containing an alkali metal is applied to the carrier. The catalyst layer traps the component of the exhaust gas. The catalyst layer contains an acidic oxide for suppressing the alkali metal from intruding into the carrier.

## Description

### BACKGROUND

The present invention relates to an exhaust gas purifier for efficiently purifying exhaust gas discharged from an engine.

In recent years, the conservation of global environment is strongly demanded. In engines, such as gasoline engines and diesel engines, generally used as vehicle drive sources, importance has been emphasized in technology for components of purifying exhaust gas, particularly such as nitrogen oxides (hereafter referred to as NOx), hydrocarbons (hereafter referred to as HC), carbon monoxide (hereafter referred to as CO) and particulate matter (hereafter referred to as PM).

As an example of technology for decreasing the amount of PM, among the components of the exhaust gas, to be discharged into the atmosphere, technology for trapping PM using a diesel particulate filter (hereafter referred to as DPF) provided in the middle of the exhaust gas passage of an engine is generally known.

Furthermore, as an example of technology for decreasing the amount of NOx, a component of the exhaust gas, to be discharged into the atmosphere, a NOx trapping catalyst is known. This NOx trapping catalyst, in the catalyst layer of which noble metals and alkali metals or alkali earth metals serving as NOx trapping materials are carried, can perform purification by trapping NOx contained in the exhaust gas in an oxidizing atmosphere (a lean atmosphere). Moreover, when the concentration of oxygen in the exhaust gas lowers (a rich atmosphere), the NOx trapping catalyst reduces the trapped NOx into harmless nitrogen using the components of the exhaust gas, such as HC and CO, and releases the harmless nitrogen into the exhaust gas.

However, the temperature of the exhaust gas and the temperature of the catalyst itself are required to be high for the operation of the NOx trapping catalyst. In a low-temperature region, the activity of the catalyst is low, and proper purification performance is not obtained. In particular, in the case that the NOx trapping catalyst is used in an internal combustion engine, such as a diesel engine, in which the temperature of the exhaust gas is relatively low, the NOx trapping ability of the NOx trapping catalyst lowers in the low-temperature region and the reduction reaction thereof is suppressed. Hence, sufficient NOx purification performance cannot be expected to be obtained. Furthermore, even when the temperature is higher than the active temperature of the catalyst, if the exhaust gas is continuously maintained in a lean atmosphere, the amount of NOx trapped in the NOx trapping catalyst becomes saturated. Hence, control (rich purge control) for forcibly changing the air-fuel ratio of the exhaust gas so as to obtain a rich atmosphere is executed at an appropriate time. By the execution of the above-mentioned rich purge control, the concentration of oxygen in the exhaust gas is lowered, and NOx is forcibly released from the NOx trapping catalyst, whereby reduction and purification are performed.

Generally speaking, cordierite or silicon carbide (hereafter referred to as SiC) is used as the carrier of a vehicle exhaust gas purifying catalyst. However, alkali metals to be added as NOx trapping materials are high in reactivity and particularly highly reactive with cordierite or silicon constituting SiC. Hence, the alkali metals move inside the carrier and form components having different thermal expansion coefficients, thereby causing a problem of lowering the strength of the carrier. Furthermore, there is a problem that the alkali metals are likely to scatter when subjected to high-temperature aging.

Hence, various kinds of NOx trapping catalysts have been developed in which zeolite, having high cation exchange ability, is ion-exchanged with an alkali metal or a transition metal so that the alkali metal is prevented from moving or scattering to the carrier and in which measures are taken to improve exhaust gas purification performance in a low-temperature region. (Refer to Patent document 1.)
[Patent document 1] Japanese Patent Publication No. 2004-202426 A

Patent document 1 described above discloses a configuration in which an alkali metal, an alkali earth metal and a transition metal ion-exchanged with and carried in zeolite are used as components for trapping NOx. Since these NOx trapping materials are not solid-soluble in the zeolite, it is assumed that the NOx trapping ability thereof is not lost even in a high-temperature region. However, although the NOx trapping catalyst according to Patent document 1 described above in which the NOx trapping materials are directly carried inside the zeolite is excellent in the NOx trapping performance when the temperature of the catalyst itself (hereafter referred to as catalyst temperature) is relatively low, the NOx trapping catalyst has a problem in its NOx trapping ability when the catalyst temperature rises. In other words, NOx is detached from the zeolite before a noble metal, other than the alkali metal, alkali earth metal and transition metal, contained in the catalyst becomes activated. This noble metal is used to promote the reaction of converting NOx released from the zeolite into nitrogen. If NOx is detached from the zeolite before the noble metal becomes activated, even if the NOx trapping ability in the high-temperature region is avoided, the exhaust gas purification performance of the NOx trapping catalyst is lowered. Consequently, there is a big problem about how to retain NOx in the zeolite until the noble metal becomes activated.

Although NOx is herein taken as an example of the component of the exhaust gas, NOx may be read as HC. In other words, the above-mentioned problem also occurs in HC trapping catalysts. It is thus necessary to allow the zeolite to securely adsorb HC until the noble metal becomes activated.

### SUMMARY

It is therefore one advantageous aspect of the present invention to provide an exhaust gas purifier having a simple configuration and being capable of purifying exhaust gas by making harmful components contained in the exhaust gas harmless efficiently and securely.

According to one aspect of the invention, there is provided an exhaust gas purifier for purifying exhaust gas of an engine, comprising:
a carrier containing zeolite which is ion-exchanged with iron and configured to adsorb a component of the exhaust gas; and
a catalyst layer, containing an alkali metal, applied to the carrier, configured to trap the component of the exhaust gas, and containing an acidic oxide for suppressing the alkali metal from intruding into the carrier.

The carrier may adsorb the component of the exhaust gas at a temperature in an inactive temperature region of the catalyst layer, and may release the component of the exhaust gas at a temperature no lower than an active temperature of the catalyst layer.

The catalyst layer may contain a noble metal and a support agent for retaining the noble metals in a dispersed state, and the catalyst layer may includes: a first layer formed on the carrier and containing at least rhodium selected from among the noble metals, and a second layer formed between the carrier and the first layer and containing a noble metal different from the noble metal contained in the first layer.

The acidic oxide may be sodalite, zeolite or at least one selected from a group consisting of oxides of silicon, phosphor, iron and tungsten.

The carrier may have a wall-flow structure, and a porosity of the zeolite contained in the carrier may be no less than 50% and no more than 90%.

With the exhaust gas purifier according to the present invention, since zeolite (Fe-type zeolite) ion-exchanged with Fe is used as a component of the carrier, the components of the exhaust gas can be adsorbed on the carrier efficiently even if the temperature of the catalyst is in a low-temperature region. Hence, the components of the exhaust gas can be suppressed from being discharged into the atmosphere in the low-temperature region.

In addition, since the catalyst layer is applied to the surface of the carrier, the catalyst layer makes contact with the exhaust gas more frequently, and the alkali metal in the catalyst layer is activated early. Hence, the components of the exhaust gas released from the carrier are further trapped by the catalyst layer and then oxidized and reduced.

Furthermore, while attention is paid to the fact that the acidic oxide has a characteristic of retaining the alkali metal, the acidic oxide is contained in the catalyst layer together with the alkali metal so as to be mixed therewith. Hence, the alkali metal is retained in the acidic oxide and prevented from intruding into the carrier, whereby the deterioration of the carrier can be suppressed. In other words, with the simple configuration of the exhaust gas purifier according to the present invention, the components of the exhaust gas can be made harmless efficiently and securely, and the exhaust gas can be purified.

Moreover, the components of the exhaust gas are adsorbed on the carrier only when the catalyst layer is in the inactive temperature region, and in the temperature region in which the components of the exhaust gas are released from the carrier, the catalyst layer has already been activated. Hence, the components of the exhaust gas can be moved efficiently to the catalyst layer having oxidizing ability and reducing ability.

Besides, the catalyst layer contains noble metals that are relatively easily available and excellent in the performance of purifying the components of the exhaust gas, and the catalyst layer is formed of the first layer and the second layer on the carrier, wherein the noble metals contained in the first layer are different from those contained in the second layer. With this configuration, the exhaust gas can be purified efficiently while the cost is suppressed.

What's more, the catalyst layer contains an acidic oxide that is relatively easily available and excellent in the performance of retaining the alkali metal. With this configuration, the cost can be suppressed, and the deterioration of the carrier due to the movement of the alkali metal does not occur even in a high-temperature atmosphere, and the exhaust gas can be purified efficiently.

Additionally, since the carrier has a wall-flow structure containing zeolite having a porosity of 50% or more, the carrier can make the harmful components in the exhaust gas harmless while filtering the exhaust gas. Consequently, the production cost and the installation space can be decreased. Still further, since the alkali metal added as the trapping material for trapping the components of the exhaust gas functions as a PM burning promoter, the trapping of the components of the exhaust gas and the burning promotion of PM mainly consisting of carbon can be carried out simultaneously.

### BRIEF DESCRIPTION OF THEDRAWINGS

Fig. 1 is a schematic view showing the configuration of a vehicle having an exhaust gas purifier according to an embodiment of the present invention.
Fig. 2 is a schematic enlarged view showing the main section A, shown in Fig. 1, of the exhaust gas purifier according to the embodiment of the present invention.
Fig. 3 is a schematic enlarged sectional view showing the main section B, shown in Fig. 2, of the exhaust gas purifier according to the embodiment of the present invention.
Fig. 4 is a schematic enlarged view showing the catalyst layer C, shown in Fig. 2, of the exhaust gas purifier according to the embodiment of the present invention.
Fig. 5 is a schematic time chart mainly showing an action regarding the NOx trapping amount of the exhaust gas purifier according to the embodiment of the present invention.
Fig. 6 is a schematic time chart mainly showing an action regarding the PM burning amount of the exhaust gas purifier according to the embodiment of the present invention.
Fig. 7 is a schematic view showing the configuration of a vehicle having an exhaust gas purifier according to a modified example of the embodiment of the present invention.
Fig. 8 is a schematic enlarged sectional view showing the main section B, shown in Fig. 2, of the exhaust gas purifier according to the modified example of the embodiment of the present invention.
Fig. 9 is a schematic time chart mainly showing actions regarding the NOx trapping amounts of exhaust gas purifiers according to comparison examples.

### DETAILED DESCRIPTION OF EXEMPLIFIED EMBODIMENTS

An exhaust gas purifier according to an embodiment of the present invention will be described below referring to the accompanying drawings.

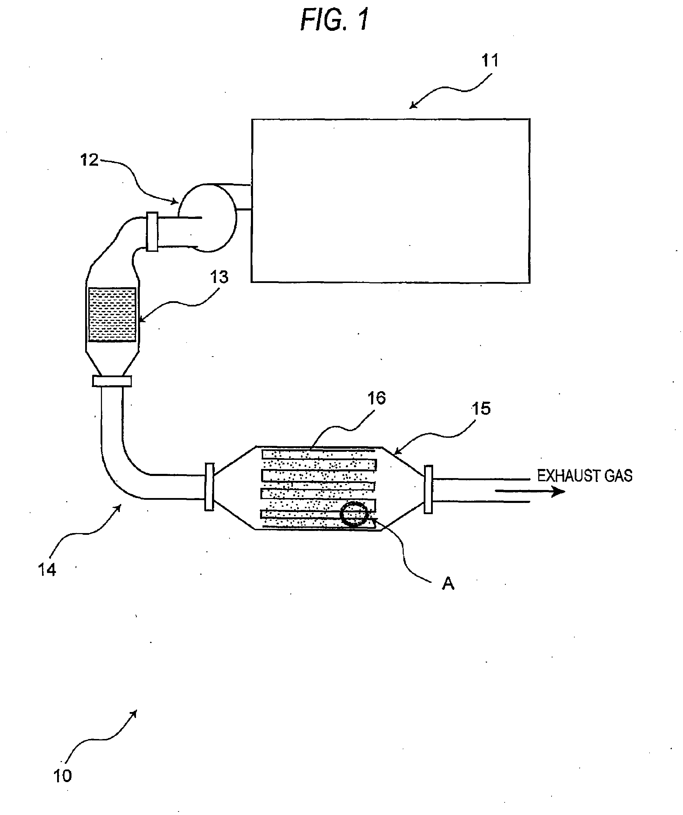

As shown in Fig. 1, a diesel engine (engine) 11 is installed in a vehicle 10 as the power source of this vehicle.

In addition, an exhaust manifold 12 is connected to the exhaust port (not shown) of the diesel engine 11. Furthermore, a diesel oxidation catalyst (hereafter referred to as DOC) 13 is connected to the downstream end of this exhaust manifold 12.

Moreover, a diesel particulate filter (hereafter referred to as DPF) 15 having a NOx purification function is connected to the downstream end of this DOC 13 via an exhaust gas passage 14.

Among these, the DOC 13 is installed adjacent to the diesel engine 11 and converts nitrogen monoxide (hereafter referred to as NO) in the exhaust gas of the engine into nitrogen dioxide (hereafter referred to as NO₂), thereby facilitating the burning of diesel particulate matter (hereafter referred to as PM) trapped in the DPF 15 on the downstream side by using the powerful oxidation performance of NO₂. Furthermore, the DOC 13 has a function of oxidizing carbon monoxide (hereafter referred to as CO) and hydrocarbons (hereafter referred to as HC) in the exhaust gas so as to make them harmless.

The DPF 15 traps PM contained in the exhaust gas discharged from the diesel engine 11, thereby preventing the PM from being discharged into the atmosphere. The PM is particulate matter mainly consisting of carbon.

In addition, the DPF 15 heats and burns the trapped PM, thereby being capable of making the trapped PM harmless.

Furthermore, the DPF 15 according to the embodiment has a function of adsorbing and purifying harmful components, such as nitrogen oxides (hereafter referred to as NOx) or HC, relatively abundantly contained in the exhaust gas during burning in a lean atmosphere.

More specifically, the Fe-type zeolite carrier (carrier) 16 of the DPF 15 is made of Fe-type zeolite mainly consisting of the Fe-type zeolite obtained by ion-exchanging Fe (iron) with aluminum in zeolite. Furthermore, the Fe-type zeolite carrier 16 is formed into a filter referred to as the so-called wall-flow filter having a structure in which numerous honeycomb-like cellular pores are alternately plugged at the front end portion and the rear end portion. Moreover, the porosity of the zeolite contained in the Fe-type zeolite carrier 16 is no less than 50% and no more than 90%.

In other words, the Fe-type zeolite carrier 16 is capable of not only carrying a catalyst layer 17 described later but also adsorbing NOx and HC regarded as harmful compounds by filtering the exhaust gas.

Besides, the Fe-type zeolite carrier 16 is designed to release NOx and HC temporarily adsorbed immediately after the start of the engine when the temperature exceeds approximately 100°C.

Although the following descriptions of the present specification and drawings are given by mainly paying attention to NOx contained in the exhaust gas for the sake of simplicity of description, NOx may be read as HC.

In addition, in the case that the Fe-type zeolite carrier 16 releases NOx, selective reduction reactions using ammonia generated in a rich condition are performed, whereby the action for purifying NOx can be improved. Ammonia used in this case is generated in a rich condition mainly by chemical reactions represented by the following formulas (1) and (2). Furthermore, hydrogen used in the chemical reaction represented by (2) is generated mainly by chemical reactions represented by the following formulas (3) and (4).

NO + HC + H₂O → CO₂ + NH₃ ... (1)

2NO + 5H₂ → 2H₂O + 2NH₃ ... (2)

CO + H₂O → CO₂ + H₂ ... (3)

HC + H₂O → CO₂ + CO + H₂ ... (4)

Moreover, the selective reduction reactions using the ammonia generated in the rich condition are represented by the following formulas (5) and (6).

4NH₃ + 4NO + O₂ → 4N2 + 6H₂O ... (5)

2NH₃ + NO + NO₂ → 2N₂ + 3H₂O ... (6)

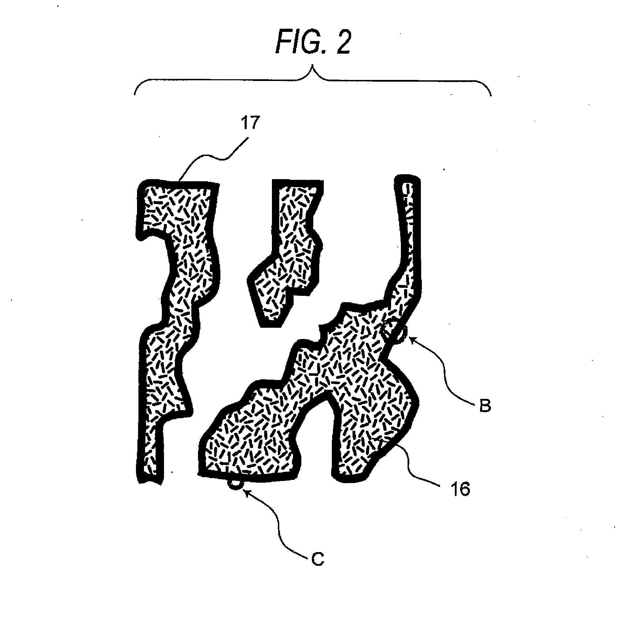

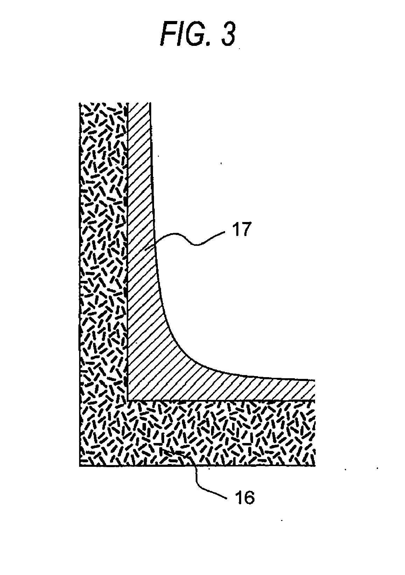

The surface of the Fe-type zeolite carrier 16 of the DPF 15 is coated with a catalyst layer 17 as shown in Figs. 2 and 3.

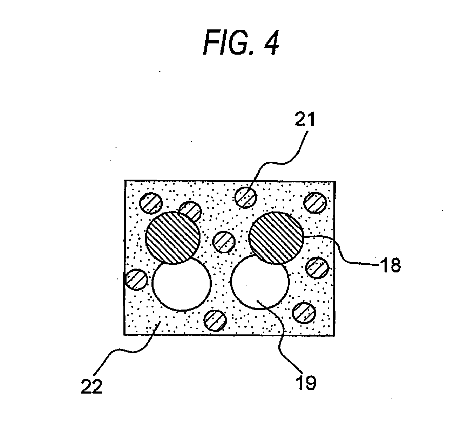

Still further, this catalyst layer 17 contains an alkali metal 18, an acidic oxide 19, a noble metal 21 and a support agent 22 as shown in Fig. 4.

Kalium (hereafter referred to as K) is used as the alkali metal 18 contained in the catalyst layer 17 and function as a NOx trapping material.

In addition, sodalite is used as the acidic oxide 19 contained in the catalyst layer 17 and functions as an anti-scattering agent for preventing K from scattering.

The sodalite is an acidic porous substance, and numerous dent pores are formed on the outer surfaces of the molecules constituting the sodalite. Since the sodalite has a characteristic of trapping K in an ionic state inside the numerous pores, the catalyst layer 17 can retain K.

In addition, the content of sodalite in the catalyst layer 17 is usually 1 g/L or more, preferably 10 g/L or more, and further preferably 20 g/L or more with respect to the volume of the Fe-type zeolite carrier 16. Furthermore, the content is usually 50 g/L or less, preferably 40 g/L or less, and further preferably 25 g/L or less. If the content of sodalite is too low, the K retention performance thereof lowers. If the content of sodalite is too high, the thickness of the catalyst layer 17 increases and the pressure of the exhaust gas rises.

Furthermore, platinum (hereafter referred to as Pt) is used as the noble metal 21 contained in the catalyst layer 17 to purify NOx, HC and CO.

In the case that the exhaust gas is in a lean atmosphere, Pt promotes the NOx trapping action of K in which NO in the exhaust gas is oxidized into NO₂. On the other hand, in the case that the exhaust gas is in a rich atmosphere, NOx is reduced into harmless nitrogen by using reducing agents, such as CO and HC, contained in the exhaust gas.

The content of Pt in the catalyst layer 17 is usually 0.05 g/L or more, preferably 1 g/L or more, and further preferably 2 g/L or more with respect to the volume of the Fe-type zeolite carrier 16. Furthermore, the content is usually 10 g/L or less, preferably 5 g/L or less, and further preferably 3 g/L or less. If the content of Pt is too low, the above-mentioned promotion of the NOx trapping action of K using Pt is not performed sufficiently, and the NOx reduction performance of Pt tends to lower. Even if the content of Pt is too high, its effect is not improved significantly, and the action is not economical.

Furthermore, aluminum oxide (hereafter referred to as Al₂O₃) is used as the support agent 22 contained in the catalyst layer 17. The support agent 22 is used to uniformly disperse Pt serving as the above-mentioned noble metal 21 in the entire catalyst layer 17.

Since Al₂O₃ serving as the support agent 22 has a pore structure and is **characterized in that** its specific surface area is relatively large, the support agent 22 can retain the noble metal 21 inside the catalyst layer 17 in a state in which the noble metal 21 is dispersed more properly.

The content of Al₂O₃ in the catalyst layer 17 is usually 1 g/L or more, preferably 30 g/L or more, and further preferably 45 g/L or more with respect to the volume of the Fe-type zeolite carrier 16. Furthermore, the content is usually 100 g/L or less, preferably 70g/L or less, and further preferably 55 g/L or less. If the content of Al₂O₃ is too low, Pt aggregates due to heat and its activity lowers, whereby the above-mentioned promotion of the NOx trapping action of K using Pt is not performed sufficiently, and the NOx reduction performance of Pt tends to lower. If the content of Al₂O₃ is too high, the thickness of the catalyst layer 17 increases, and the pressure of the exhaust gas tends to rise.

Since the exhaust gas purifier according to the embodiment of the present invention is configured as described above, the exhaust gas purifier performs the following actions and produces the following effects.

Since the Fe-type zeolite carrier 16 mainly consisting of Fe-type zeolite is used for the DPF 15, NOx can be adsorbed inside the DPF 15 even at the cold start time of the diesel engine 11. Hence, the purification temperature range of the DPF 15 having a NOx purification function can be extended. In addition, since the catalyst layer containing K is applied to the surface of the Fe-type zeolite carrier 16, the catalyst layer makes contact with the exhaust gas more frequently, and K in the catalyst layer is activated early. Hence, NOx contained relatively abundantly in the exhaust gas in a lean atmosphere is trapped, and the trapped NOx is subjected to a reduction reaction using reducing agents, such as CO and HC, discharged when the atmosphere of the exhaust gas becomes a rich atmosphere, whereby NOx in the exhaust gas can be purified. Furthermore, the NOx adsorbed onto the Fe-type zeolite is selectively reduced using NH₃ generated in the rich atmosphere. As a result, the NOx purification performance can be improved further.

Generally speaking, if K is contained in the catalyst layer 17, K reacts with the Fe-type zeolite of the Fe-type zeolite carrier 16, whereby it is conceivable that the NOx adsorption action of the Fe-type zeolite carrier 16 is lowered mainly by ion-exchanged Fe. In addition, it is generally feared that K is likely to scatter from the catalyst layer 17 when K is exposed to the high-temperature exhaust gas of the engine.

However, in the embodiment, since sodalite serving as the acidic oxide 19 is contained in the catalyst layer 17, K is retained on the surface of sodalite, whereby K can be present stably in the catalyst layer 17 while the activity of the Fe-type zeolite carrier 16 is maintained. In other words, since sodalite is contained as one of the components of the catalyst layer 17, K is prevented from moving to the Fe-type zeolite carrier 16, whereby the NOx adsorption performance of the Fe-type zeolite carrier 16 can be suppressed from lowering. Hence, NOx in the exhaust gas can be adsorbed securely even at the cold start time of the diesel engine 11. Furthermore, sodalite is capable of not only preventing K from moving but also preventing a situation in which K scatters from the catalyst layer 17 when K is exposed to high-temperature exhaust gas. As a result, the high reactivity of K itself with NOx in the exhaust gas can be maintained continuously.

In other words, NOx in the exhaust gas discharged from the diesel engine 11 in a cold state is adsorbed onto the Fe-type zeolite carrier 16. As the temperature of the Fe-type zeolite carrier 16 rises thereafter, NOx begins to be detached from the Fe-type zeolite carrier 16. However, in the embodiment, K is stably contained in the catalyst layer 17 by virtue of sodalite. Hence, when NOx is detached from the Fe-type zeolite carrier 16, most of the NOx detached from the Fe-type zeolite carrier 16 is trapped again by K.

For this reason, even in a transient period in which the state of the diesel engine 11 changes from the cold state to the hot state, the amount of NOx to be released into the atmosphere can be decreased significantly in comparison with conventional technology.

Furthermore, in the embodiment, since Al₂O₃ is used as the support agent 22 of the catalyst layer 17, Pt serving as the noble metal 21 can be dispersed property into the catalyst layer 17 and can be retained therein. Hence, the reactivity of Pt with NOx serving as a harmful component in the exhaust gas can be improved, whereby the harmful component inside the exhaust gas can be made harmless more quickly and securely.

Moreover, since Pt is retained inside the catalyst layer 17 in a high dispersion state, even if harmful CO is generated when carbon contained in PM in the exhaust gas burns, the CO is oxidized into harmless carbon dioxide (hereafter referred to as CO₂) more securely, and CO₂ is discharged into the atmosphere.

Still further, the exhaust gas is purified by trapping PM contained in the exhaust gas discharged from the diesel engine 11 using the DPF 15. However, if the amount of the PM trapped using the DPF 15 increases excessively, the pressure loss of the exhaust gas increases undesirably. In this case, the so-called forced regeneration is generally carried out in which PM deposited inside the DPF 15 is burnt by raising the temperature of the exhaust gas to be supplied into the DPF 15. However, when the forced regeneration is carried out, it is necessary to increase the injection amount of fuel more than that required during normal engine operation. For this reason, there is a strong demand for decreasing the frequency of performing forced regeneration as much as possible from the viewpoint of fuel consumption.

On the other hand, in the embodiment, since K is used as the alkali metal 18 of the catalyst layer 17, the amount of heat required to burn the PM trapped in the DPF 15 can be decreased significantly in comparison with that in conventional technology. Hence, even if the frequency of performing forced regeneration is decreased in comparison with that in conventional technology, the PM trapped in the DPF 15 can be burnt relatively easily during the normal operation of the diesel engine 11, whereby the injection amount of fuel required for the execution of forced regeneration can be decreased.

In addition, since the PM trapped in the DPF 15 can be removed easily while the amount of heat is maintained relatively low. Hence, the increase in the pressure loss of the exhaust gas due to the PM trapped in the DPF 15 can be prevented even during the normal operation of the diesel engine 11.

It is not known precisely how K functions to decrease the amount of heat required for burning the PM, but it is assumed that the oxygen contained in the exhaust gas is attracted by the electron-donating action of K and that the oxygen reacts efficiently with the carbon inside the PM deposited in the DPF 15.

In addition, in the embodiment, the Fe-type zeolite carrier 16 forms a wall-flow filter containing zeolite having a porosity of 50% or more. Hence, the Fe-type zeolite carrier 16 is capable of not only functioning as the DPF 15 for trapping PM but also functioning to adsorb and purify NOx, thereby further being capable of making the harmful components in the exhaust gas harmless while filtering the exhaust gas. Consequently, the production cost and the installation space can be decreased.

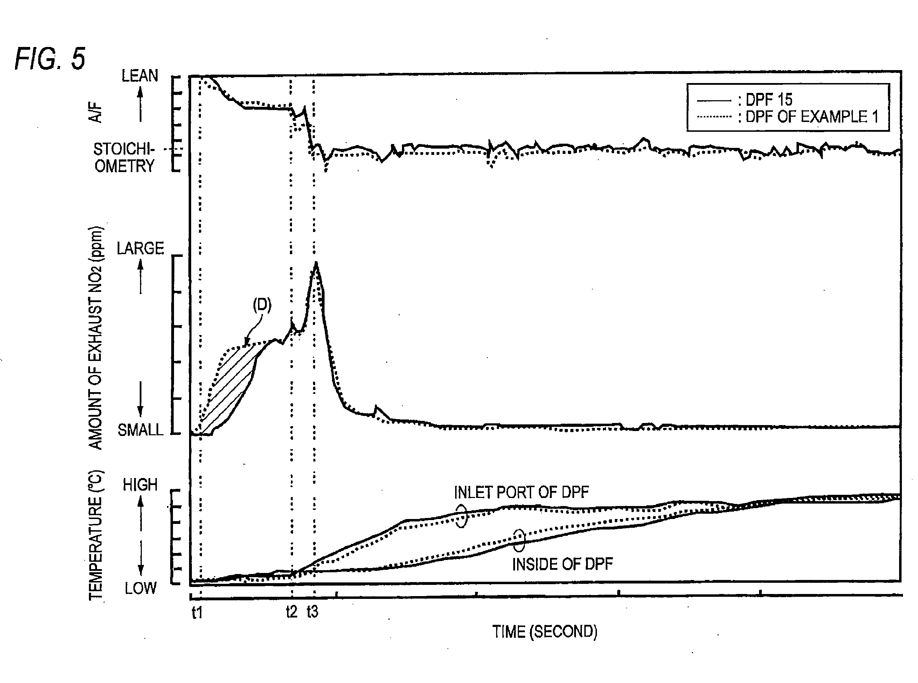

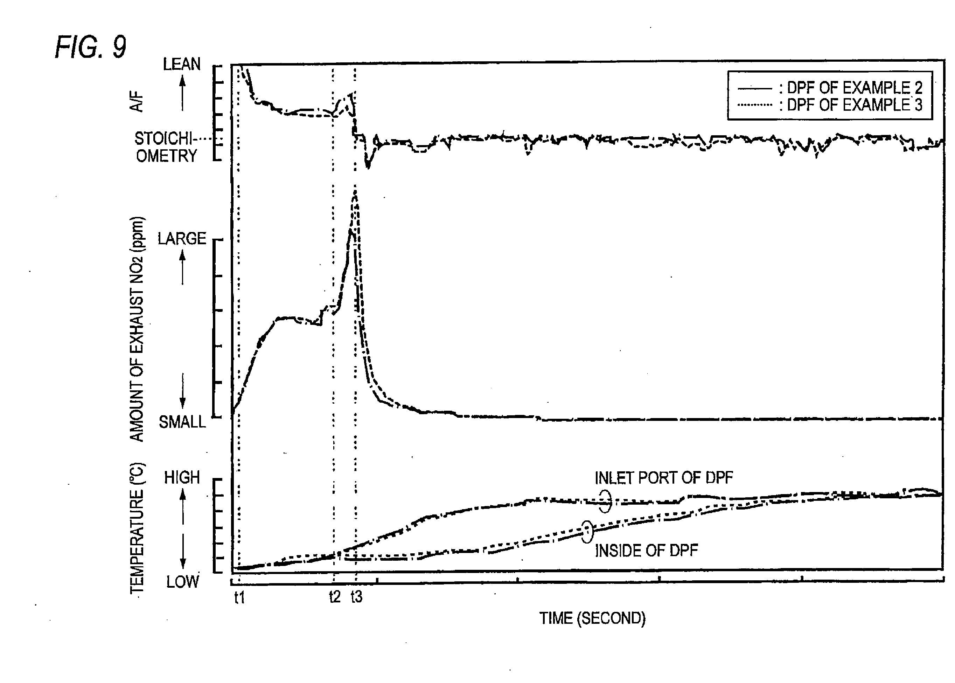

It will be described below in what respects the DPF 15 having the NOx purification function according to the embodiment is superior to DPFs having other NOx purification functions, referring to (A) to (C) of Fig. 5 and (A)to (C) of Fig. 9.

First, a description is given referring to Fig. 5.

Fig. 5 shows relationships between the DPF 15 having the NOx purification function according to the embodiment indicated by solid lines and a DPF (a DPF according to comparison example 1) having a general NOx purification function indicated by broken lines.

In the DPF 15 according to the embodiment, the catalyst layer 17 containing sodalite and K is carried in the Fe-type zeolite carrier 16 as described referring to Figs. 1 to 4. On the other hand, in the DPF according to comparison example 1, a catalyst layer in which sodalite and K are not contained is carried in a cordierite carrier. The configuration of the DPF 15 according to the embodiment is similar to that of the DPF according to comparison example 1, except in the point described above.

As shown in (C) of Fig. 5, both the temperature at the inlet of the DPF and the temperature inside the DPF are very low, for example, approximately 25°C, at time t1 immediately after the cold start of the engine.

Furthermore, in the case of the DPF according to comparison example 1, it is known that NOx has already begun to be discharged into the atmosphere at time t1 as indicated by the broken line in (B) of Fig. 5.

On the other hand, in the case of the DPF 15 according to the embodiment, the amount of NOx discharged into the atmosphere at time t1 is small and it is known that the NOx adsorption action is performed immediately after the start of the engine as indicated by the solid line in (B) of Fig. 5.

Furthermore, in the case of the DPF 15 according to the embodiment, NOx is hardly discharged into the atmosphere in the period between time t1 and time t2 as indicated by the solid line in (B) and the shaded portion (D) of Fig. 5.

In other words, the amount of NO x adsorption in the period between time t1 and time t2 in the DPF 15 according to the embodiment is much larger than that in comparison example 1. It is thus found that the DPF 15 according to the embodiment has an excellent NOx purification function.

It is conceivable that the above-mentioned difference in the amount of NO x adsorption occurs due to the following reasons.

The DPF 15 according to the embodiment differs from the DPF according to comparison example 1 depending on whether the carrier is the Fe-type zeolite carrier or the cordierite carrier.

The Fe-type zeolite carrier has performance of adsorbing NOx on an Fe site and performance of adsorbing NOx in a low-temperature region in which the temperature of the catalyst layer does not reach approximately 100°C immediately after the start of the engine.

In other words, since the DPF 15 according to the embodiment is equipped with the Fe-type zeolite carrier and has the NOx adsorption performance, it is conceivable that the DPF 15 differs from the DPF according to comparison example 1 in the amount of NO x adsorption.

Next, a description is given referring to Fig. 9.

Fig. 9 shows relationships between a DPF according to comparison example 2 indicated by dashed lines and a DPF according to comparison example 3 indicated by broken lines, wherein the comparison examples are used as comparison examples of the embodiment. The DPF according to comparison example 2 is a DPF equipped with a NOx purification function, wherein a catalyst layer in which sodalite is not contained and K is in an unstable state is carried in an Fe-type zeolite carrier. The DPF according to comparison example 3 is a DPF having no catalyst layer and equipped with a NOx purification function, wherein K is directly carried in an Fe-type zeolite carrier as described in the prior art document, for example. The configurations of the DPFs according to comparison examples 2 and 3 are similar to that of the DPF according to the embodiment except in the points described above.

As shown in (C) of Fig. 9, both the temperature at the inlet of the DPF and the temperature inside the DPF are very low at time t1 (at the same temperature as that at time t1 shown in Fig. 5) immediately after the cold start of the engine.

Furthermore, in the case of the DPF according to comparison example 2, it is known that NOx has already begun to be discharged into the atmosphere at time t1 as indicated by the dashed line in (B) of Fig. 9.

Moreover, in the case of the DPF according to comparison example 3, it is also known that NOx has already begun to be discharged into the atmosphere at time t1 as indicated by the broken line in (B) of Fig. 9.

What's more, it is found that both comparison examples 2 and 3 have released large amounts of NOx into the atmosphere even in the period between time t1 and time t2 (at the same temperature as that shown in Fig. 5).

In other words, the DPFs according to comparison examples 2 and 3 are not equipped with performance possessed by the DPF according to the embodiment, that is, the DPFs are not equipped with excellent NOx adsorption performance in a low-temperature region in which the temperature of the catalyst layer does not reach approximately 100°C immediately after the start of the engine.

Hence, although the DPF according to comparison example 2 differs from the DPF according to comparison example 3 depending on whether K is contained in the catalyst layer and carried indirectly in the Fe-type zeolite or the Fe-type zeolite carries K directly, it is conceivable that this difference does not affect the NOx adsorption performance immediately after the start of the engine.

However, although the DPFs according to comparison examples 2 and 3 shown in Fig. 9 are each equipped with a Fe-type zeolite carrier being excellent in NOx adsorption performance in the low-temperature region, the DPFs differ from the DPF according to the embodiment in NOx adsorption performance.

It is conceivable that the above-mentioned difference in NOx adsorption performance occurs due to the following reasons.

The DPF according to the embodiment differs from the DPFs according to comparison examples 2 and 3 depending on whether sodalite is contained.

It is herein assumed that sodalite has a function of stably retaining K.

In other words, the difference occurs depending on whether K contained in the DPF is retained stably by sodalite or K is in an unstable state because sodalite is not contained.

Fundamentally, K is added so as to function as a NOx trapping material. However, if K is contained in an unstable state as in the cases of comparison examples 2 and 3, since K has high activity by nature, K moves to the Fe-type zeolite. This mainly results in significant lowering in the performance of adsorbing NOx onto the Fe site, more particularly, in the NOx adsorption performance of the Fe-type zeolite in the low-temperature region in which the temperature of the catalyst layer does not reach approximately 100°C.

However, since the catalyst layer 17 of the DPF 15 according to the embodiment contains sodalite serving as the acidic oxide 19, K is adsorbed on the surface of the sodalite and can be retained stably in the catalyst layer 17. For this reason, K is prevented from moving to the Fe-type zeolite carrier 16, and the lowering of the NOx adsorption performance of the Fe-type zeolite carrier 16 is suppressed. Hence, it is conceivable that, unlike the DPFs according to comparison examples 2 and 3, the DPF 15 according to the embodiment has an excellent NOx adsorption action even during the cold start of the diesel engine 11.

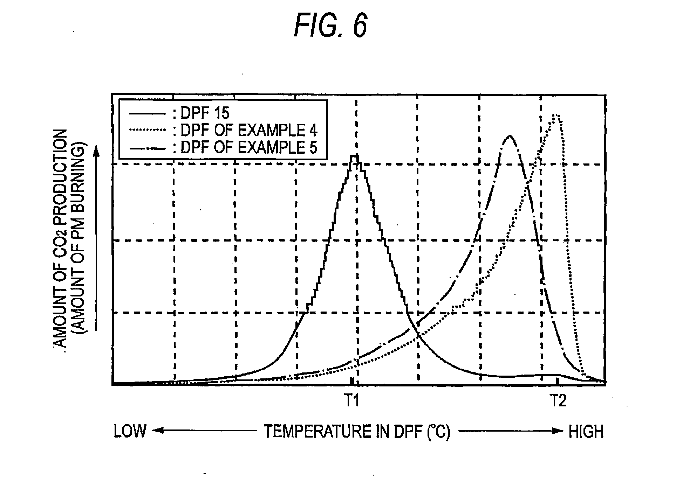

In addition, referring to Fig. 6, the following description is given to point out that the DPF 15 having the NOx purification function according to the embodiment and indicated by a solid line can burn PM at a temperature relatively lower than the temperatures in a DPF (hereafter referred to as DPF according to comparison example 4) having a general NOx purification function and indicated by a broken line and in a DPF (hereafter referred to as DPF according to comparison example 5) having a NOx purification function according to the prior art and indicated by a dashed line.

The configuration of the DPF according to comparison example 4 is similar to that of the DPF according to the embodiment, except that the carrier is formed of cordierite and that K and sodalite are not contained in the catalyst layer. Furthermore, the configuration of the DPF according to comparison example 5 is similar to that of the DPF according to the embodiment, except that the catalyst layer in which sodalite is not contained and K is set in an unstable state is carried in the Fe-type zeolite carrier.

Fig. 6 shows the results of the so-called powder test. The conditions of the powder test are described below.

It is assumed that the catalyst layer 17 according to the embodiment and the catalyst layers according to comparison examples 4 and 5 are formed of powder.

Each catalyst in powder form is mixed with toner that is simulated to PM at the ratio of 6:1 by weight.

The mixture of the catalyst in powder form and the toner is placed on the respective carriers of the DPF 15 according to the embodiment and the DPFs according to comparison examples 4 and 5.

In the case that the temperature of the exhaust gas passed through the DPF 15 according to the embodiment and the DPFs according to comparison examples 4 and 5 is raised 5°C per minute, the amounts of CO₂ discharged from the respective DPFs are measured.

The flow rate of the exhaust gas is 40 mL/minute.

As indicated by the broken line in Fig. 6, when the temperature inside the DPF according to comparison example 4 is raised to T2 (approximately 600°C), the discharge amount of CO₂ reaches its peak.

Furthermore, as indicated by the dashed line in Fig. 6, when the temperature inside the DPF according to comparison example 5 is raised to a temperature lower than but close to T2, the discharge amount of CO₂ reaches its peak.

On the other hand, as indicated by the solid line in Fig. 6, when the temperature inside the DPF 15 according to the embodiment is raised to T1 (approximately 400°C), the discharge amount of CO₂ reaches its peak.

In other words, it can be observed from Fig. 6 that the amount of heat for burning the most part of the PM deposited in the DPF 15 according to the embodiment is less than the amount of heat for burning the most part of the PM deposited in each of the DPFs according to comparison examples 4 and 5.

For this reason, in the DPFs according to comparison examples 4 and 5, for the purpose of suppressing the increase in the pressure loss of the exhaust gas due to a large amount of PM deposited in each of the DPFs during engine operation, it is necessary to frequently perform forced regeneration in which the deposited PM is burnt so as to be removed from each of the DPFs. Furthermore, the forced regeneration is required to be carried out at temperatures inside the DPFs according to comparison examples 4 and 5 considerably higher than the temperature inside the DPF 15 according to the embodiment. As a result, a significant increase in the amount of fuel injection is inevitable.

On the other hand, in the DPF 15 according to the embodiment, as indicated by the solid line in Fig. 6, the PM deposited in the DPF can be burnt even if the temperature inside the DPF is considerably lower than the temperatures inside the DPFs according to comparison examples 4 and 5.

In other words, in the embodiment, since the catalyst layer 17 contains K as the alkali metal 18 and also contains sodalite as the acidic oxide 19 capable of stably retaining K in the catalyst layer 17, the oxygen contained in the exhaust gas is attracted by the electron-donating action of K and the oxygen improves burning efficiency. For this reason, even if the temperature inside the DPF 15 is relatively low, the PM deposited therein can be burnt.

Hence, the frequency of performing forced regeneration can be decreased, or the PM deposited in the DPF 15 can be burnt relatively easily during normal engine operation without performing forced regeneration. In addition, the amount of fuel injection in the diesel engine 11 can be decreased. Furthermore, the increase in the pressure loss of the exhaust gas due to the PM deposited in the DPF 15 can be suppressed.

On the other hand, in the DPF according to comparison example 4, since K having the electron-donating action is not contained in the catalyst layer, the burning efficiency of PM is low, and it is necessary to raise the temperature inside the DPF to a high temperature in order to burn the deposited PM.

Moreover, in the DPF according to comparison example 5, although the catalyst layer contains K, the catalyst layer does not contain sodalite capable of retaining K stably, whereby K is not retained stably in the catalyst layer. Hence, K intrudes into the Fe-type zeolite carrier, and the above-mentioned action of K for lowering the burning temperature of PM is degraded.

A modified example of the above-mentioned embodiment according to the present invention will be described below.

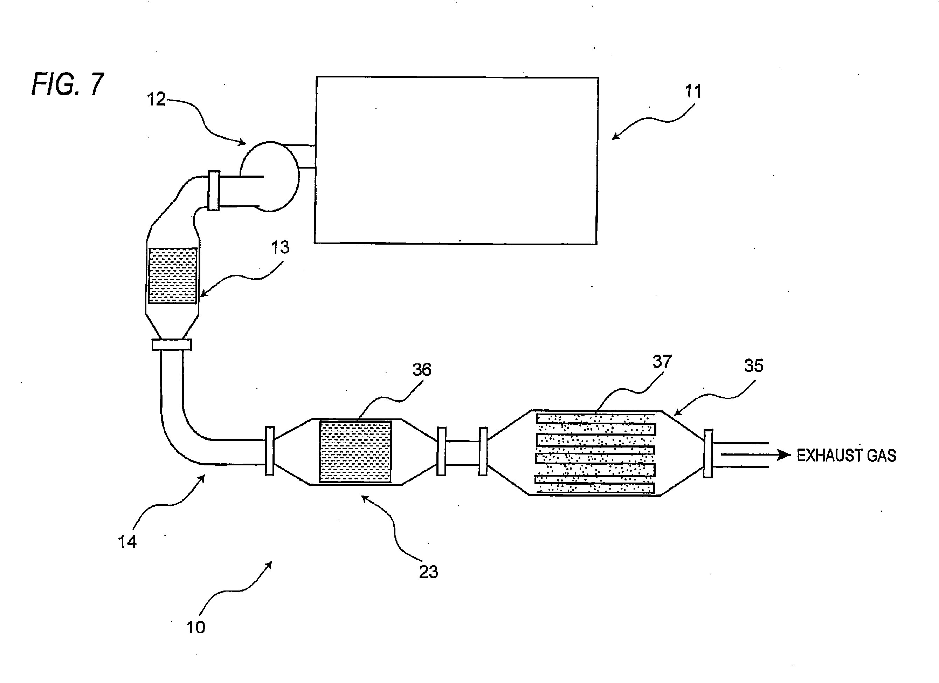

In the above-mentioned embodiment, although a case has been described in which the DPF 15 having a NOx purification function is used as an exhaust gas purifier, the exhaust gas purifier is not limited to this type. For example, as in the case of the modified example shown in Fig. 7, a NOx trapping catalyst 23 and a DPF 35 may be installed separately in a vehicle

In other words, in the vehicle 10 described above referring to Fig. 1, a case has been described in which the exhaust manifold 12 is connected to the downstream side of the exhaust port (not shown) of the diesel engine 11, the DOC 13 is connected to the downstream side of the exhaust manifold 12, and the DPF 15 is connected to the downstream end of the DOC 13 via the exhaust gas passage 14.

On the other hand, in the modified example, the NOx trapping catalyst 23 is provided between the DOC 13 and the DPF 35 as shown in Fig. 7.

Among these, the NOx trapping catalyst 23 is formed of an Fe-type zeolite carrier 36 having an open-flow type honeycomb structure and a catalyst layer carried in this Fe-type zeolite carrier 36. The configuration of the Fe-type zeolite carrier 36 is similar to that of the Fe-type zeolite carrier 16 described referring to Figs. 1 to 4, except that the Fe-type zeolite carrier 36 has the open-flow type structure. Hence, the configuration of the catalyst layer 17 carried in the Fe-type zeolite carrier 36 according to the modified example is exactly the same as that of the catalyst layer 17 according to the above-mentioned embodiment.

The NOx trapping catalyst 23 is used to trap NOx contained in the exhaust gas and to purify the NOx into harmless nitrogen.

In addition, the DPF 35 traps PM contained in the exhaust gas discharged from the diesel engine 11, thereby preventing the PM from being discharged into the atmosphere. Furthermore, the DPF 35 heats and burns the trapped PM, thereby being capable of making the PM harmless. The carrier 37 of the DPF 35 according to the modified example has a wall-flow structure and is made of ceramic. Furthermore, the catalyst layer 17 is not formed in the ceramic carrier 37.

Hence, although the DPF 15 according to the above-mentioned embodiment shown in Fig. 1 has the Fe-type zeolite carrier 16, the DPF 35 according to the modified example shown in Fig. 7 has the ceramic carrier 37. In this respect, the DPFs are different from each other.

Furthermore, although the catalyst layer 17 is formed in the Fe-type zeolite carrier 16 according to the above-mentioned embodiment shown in Fig. 1, a catalyst layer containing a noble metal may be formed in the ceramic carrier 37 according to the modified example shown in Fig. 7, but the catalyst layer 17 containing K and sodalite is not formed in the ceramic carrier 37. In this respect, the carriers are different from each other.

Working effects similar to the working effects obtained using the DPF 15 according to the above-mentioned embodiment can also be obtained by the modified example of the present invention.

Furthermore, since the NOx trapping catalyst 23 and the DPF 35 are installed independently in the vehicle 10, the NOx trapping catalyst 23 and the DPF 35 can be repaired or replaced independently. Hence, the modified example is advantageous in that the serviceability of the vehicle 10 can be improved.

Although only some exemplary embodiments of the invention have been described in detail above, those skilled in the art will readily appreciated that many modifications are possible in the exemplary embodiments without materially departing from the novel teachings and advantages of the invention. Accordingly, all such modifications are intended to be included within the scope of the invention.

In the above-mentioned embodiment, although a case has been described in which the diesel engine 11 is installed in the vehicle 10, the engine is not limited to the diesel engine 11, but a gasoline engine may be used instead of the diesel engine 11.

Furthermore, in the case that a gasoline engine is installed in the vehicle 10, a configuration without the DPF 35 may be adopted while the configuration shown in Fig. 7 is used as a basic configuration. In the case that exhaust gas purification performance is required to be improved further, the exhaust gas discharged from the gasoline engine may be purified using the DPF 35.

Moreover, although a case has been described in which the Fe-type zeolite carrier 16 mainly consisting of Fe-type zeolite is used as the carrier of the DPF 15 in the above-mentioned embodiment, the carrier is not limited to this carrier. For example, a carrier containing Fe-type zeolite as one component and also containing zeolite that is ion-exchanged with another transition metal may also be used as the carrier of the DPF 15. Still further, a material (for example, cordierite or graphite) for increasing the strength of the carrier may be contained in the carrier of the DPF 15. What's more, the DPF 15 may have a segment structure for higher strength.

In addition, in the above-mentioned embodiment, although a case has been described in which K is used as the alkali metal 18 contained in the catalyst layer 17 of the DPF 15, the alkali metal is not limited to K. For example, sodium or lithium may be used independently as the alkali metal 18 contained in the catalyst layer 17. Alternatively, some of K, sodium and lithium may be selected appropriately and mixed, and the mixture may be used. Any of the alkali metals has a function to serve as a NOx trapping material and also has a function of decreasing the amount of heat required to burn the PM trapped in the DPF 15.

Furthermore, although a case has been described in which sodalite is used as the acidic oxide 19 contained in the catalyst layer 17 of the DPF 15, the acidic oxide is not limited to sodalite. For example, zeolite may be used independently by paying attention to the fact that zeolite is an acidic porous substance and has a characteristic of trapping alkali metals inside the numerous dent pores formed on the outer surfaces of the molecules constituting the zeolite. Moreover, oxides of silicon, phosphor, iron or tungsten may also be used independently by paying attention to the fact that such an oxide is acidic and has a characteristic of being capable of attracting and trapping alkali metals. Alternatively, some of sodalite, zeolite and the oxides of silicon, phosphor, iron and tungsten may be selected appropriately and mixed, and the mixture may be used. Any of the acidic oxides has a function of stably retaining the alkali metal 18 in the catalyst layer 17.

In addition, the content of the acidic oxide 19 in the catalyst layer 17 is usually 1 g/L or more, preferably 10 g/L or more, and further preferably 20 g/L or more with respect to the volume of the carrier as in the case that sodalite is used. Furthermore, the content is usually 50 g/L or less, preferably 40 g/L or less, and further preferably 25 g/L or less. If the content of the acidic oxide 19 is too low, the retention performance of the alkali metal 18 lowers. If the content of acidic oxide 19 is too high, the thickness of the catalyst layer 17 increases and the pressure of the exhaust gas rises.

In addition, in the above-mentioned embodiment, although a case has been described in which Pt is used as the noble metal 21 contained in the catalyst layer 17 of the DPF 15, the noble metal is not limited to Pt. For example, palladium, rhodium, ruthenium or iridium may be used independently. Alternatively, some of Pt, palladium, rhodium, ruthenium and iridium may be selected appropriately and mixed, and the mixture may be used. In the case that the exhaust gas is in a lean atmosphere, any of the noble metals has a function of promoting the NOx trapping action of the alkali metal 18 in which NO in the exhaust gas is oxidized into NO₂. On the other hand, in the case that the exhaust gas is in a rich atmosphere, any of the noble metals has a function of reducing NOx into harmless nitrogen by using reducing agents, such as CO and HC, contained in the exhaust gas.

Furthermore, even if harmful CO is generated when carbon contained in the PM in the exhaust gas burns, any of the noble metals has a function of oxidizing the CO into harmless CO₂.

Moreover, in the above-mentioned embodiment, although a case has been described in which Al₂O₃ is used as the support agent 22 contained in the catalyst layer 17 of the DPF 15, the support agent is not limited to Al₂O₃. For example, silica, titanium oxide, cerium oxide or magnesium oxide may be used independently. Alternatively, some of Al₂O₃, silica, titanium oxide, cerium oxide and magnesium oxide may be selected appropriately and mixed, and the mixture may be used. Any of the support agents has a function of retaining the noble metal 21 in a state in which the noble metal 21 is dispersed more properly.

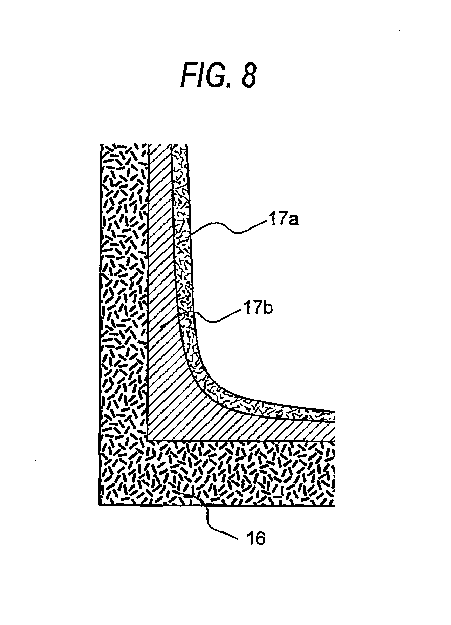

Still further, in the above-mentioned embodiment, although a case has been described in which the catalyst layer 17 is formed of only one layer, the catalyst layer 17 is not limited to be formed of only one layer. For example, as shown in Fig. 8, the catalyst layer 17 may be formed of a first layer 17a formed on the Fe-type zeolite carrier 16 and a second layer 17b formed between this first layer 17a and the Fe-type zeolite carrier 16.

In this case, the first layer 17a should only be formed so as to contain at least one of the above-mentioned noble metals (that is, Pt, palladium, rhodium, ruthenium and iridium), and the second layer 17b should only be formed so as to contain noble metals that are selected from among the above-mentioned noble metals and different from those contained in the first layer 17a. Hence, situations in which different noble metals adversely affect one another can be prevented beforehand, the deterioration of the noble metals can be suppressed, and the reactivity of the noble metals with the harmful components in the exhaust gas can be maintained high. As a result, the exhaust gas can be purified efficiently.

Furthermore, the catalyst layer 17 may be formed so that rhodium is contained in the first layer 17a. In this case, rhodium is disposed so as to easily make contact with the exhaust gas. With this configuration, even under reactivity low temperature conditions, rhodium is particularly excellent in oxidation performance in the case that the exhaust gas is in a lean atmosphere and also particularly excellent in reduction performance in the case that the exhaust gas is in a rich atmosphere, and rhodium can make the harmful components in the exhaust gas harmless more securely even during the cold state. As a result, the exhaust gas purification function of the DPF 15 can be improved further.

In addition, the catalyst layer 17 may be formed so that titanium oxide for improving the exhaust gas purification function by suppressing the adsorption of sulfur oxides in the exhaust gas is contained therein as a sulfur poisoning suppressor. With this configuration, it is possible to suppress the NOx trapping performance of the alkali metal 18 serving as the NOx trapping material of the catalyst layer 17 from being lowered by sulfur poisoning.

The content of titanium oxide in the catalyst layer 17 is usually 1 g/L or more, preferably 5 g/L or more, and further preferably 10 g/L or more with respect to the volume of the carrier. Furthermore, the content is usually 50 g/L or less, preferably 30 g/L or less, and further preferably 20 g/L or less.

If the content of titanium oxide is too low, there is a tendency that the lowering of the NOx trapping performance of the alkali metal 18 due to sulfur poisoning is not suppressed sufficiently. If the content of titanium oxide is too high, there is a tendency that the thickness of the catalyst layer 17 increases and the pressure of the exhaust gas rises.

Moreover, in the above-mentioned embodiment, although a case has been described in which the harmful substance in the exhaust gas is NOx, the harmful substance is not limited to NOx. For example, NOx described above may be read as HC.

The disclosure of Japanese Patent Application No. 2009-191769 filed August 21, 2009 including specification, drawings and claims is incorporated herein by reference in it is entirety.

## Claims

1. An exhaust gas purifier for purifying exhaust gas of an engine, comprising:
a carrier containing zeolite which is ion-exchanged with iron and configured to adsorb a component of the exhaust gas; and
a catalyst layer, containing an alkali metal, applied to the carrier, configured to trap the component of the exhaust gas, and containing an acidic oxide for suppressing the alkali metal from intruding into the carrier.

2. The exhaust gas purifier according to claim 1, wherein
the carrier adsorbs the component of the exhaust gas at a temperature in an inactive temperature region of the catalyst layer, and releases the component of the exhaust gas at a temperature no lower than an active temperature of the catalyst layer.

3. The exhaust gas purifier according to claim 1 or 2, wherein
the catalyst layer contains a noble metal and a support agent for retaining the noble metals in a dispersed state, and
the catalyst layer includes:
a first layer formed on the carrier and containing at least rhodium selected from among the noble metals, and
a second layer formed between the carrier and the first layer and containing a noble metal different from the noble metal contained in the first layer.

4. The exhaust gas purifier according to any one of claims 1 to 3, wherein the acidic oxide is sodalite, zeolite or at least one selected from a group consisting of oxides of silicon, phosphor, iron and tungsten.

5. The exhaust gas purifier according to any one of claims 1 to 4, wherein
the carrier has a wall-flow structure, and
a porosity of the zeolite contained in the carrier is no less than 50% and no more than 90%.
